# FASCICULE DE BREVET EUROPEEN

(11) **EP 4 527 245 B1**
(45) Date de publication et mention de la délivrance du brevet: **08.04.2026**
(21) Numéro de dépôt: 23216834.4
(22) Date de dépôt: 14.12.2023
(51) Int. Cl.: A45D 34/00, A45D 34/04, A45D 40/26, B29C 45/14, B29C 70/76, B65D 35/10

(54) **RÉCIPIENT À JUPE TUBULAIRE**
BEHÄLTER MIT ROHRFÖRMIGER SCHÜRZE
CONTAINER WITH TUBULAR SKIRT

(30) Priorité: 22.09.2023 FR 2310047
(43) Date de publication de la demande: 26.03.2025
(73) Titulaire: ALBEA SERVICES, 92400 Courbevoie (FR)
(72) Inventeur: CRAPET, Yann, 92230 GENNEVILLIERS (FR); ZOU, Furong, 92230 GENNEVILLIERS (FR); JIANG, Fucai, 92230 GENNEVILLIERS (FR)
(74) Mandataire: Gevers & Orès

(56) Documents cités:
- EP-B1- 1 138 605
- WO-A1-2022/210448
- FR-A- 1 111 006

## Description

### Domaine technique de l'invention

La demande concerne le domaine technique de la cosmétique, et notamment un récipient pour un produit cosmétique comprenant une jupe tubulaire formant un réservoir pour la réception du produit cosmétique.

### Arrière-plan technique

Il est connu des récipients de types tubes souples comprenant une tête et une jupe tubulaire fixée sur la tête, notamment une jupe tubulaire flexible ou souple. Le tube est notamment fermé, à son extrémité opposée à la tête, par soudure du bord de la jupe sur lui-même, créant ainsi un fond sous forme d'arête. Dans une telle configuration, le récipient doit être posé sur sa tête afin de tenir debout. Une telle configuration complexifie la logistique de transport et de stockage, par exemple avec la mise en carton obligatoirement par le capot. Par ailleurs, si le capot n'a pas de surface plane, la mise en carton et le stockage peuvent être encombrants.

Par ailleurs, dans ce type de récipient, le remplissage se fait par l'extrémité opposée à la tête, qui est ensuite fermée par soudure comprenant une étape de pression. Dans le cas particulier, d'un récipient avec embout applicateur fixé à une tige et logé dans le fond du récipient, le scellage après remplissage peut endommager l'embout applicateur, notamment lors de l'étape de pression.

Ces récipients de types tubes souples sont reconnus pour améliorer la restitution en produit cosmétique, notamment par pression sur la paroi souple de celui-ci. En revanche, dans le cas particulier, d'un récipient avec embout applicateur fixé à une tige et logé dans le fond du récipient, il y a un risque d'endommager l'embout applicateur si une pression est exercée sur la paroi souple, en particulier au niveau de la partie inférieur du récipient.

Il existe donc un besoin d'une solution permettant de résoudre au moins une partie des inconvénients de l'art antérieur tout en conservant un produit qui soit simple et économique à fabriquer.

EP1138605 décrit un récipient avec un capuchon dans la partie inférieure.

### Résumé de l'invention

L'invention concerne un récipient comprenant une jupe tubulaire formant un réservoir pour la réception du produit cosmétique et comprenant en outre une première ouverture d'extrémité, et une seconde ouverture d'extrémité opposée à la première ouverture d'extrémité,
la première ouverture d'extrémité étant située dans une partie inférieure du récipient et obturée de manière étanche par un capuchon présentant une rigidité supérieure à celle de la jupe tubulaire,
caractérisé en ce que la partie inférieure du récipient comprend un support de moulage emmanché à l'intérieur d'une paroi circonférentielle de la première ouverture d'extrémité, et
ledit capuchon est disposé à une extrémité du support de moulage et sur la paroi circonférentielle de la première ouverture d'extrémité et surmoulé à la fois sur le support de moulage et sur ladite paroi circonférentielle.

Selon différents modes ou exemples de réalisation, qui pourront être pris ensemble ou séparément :
- la partie inférieure du récipient comprend une surface de positionnement permettant le maintien stable du récipient sur un support plan,
- le capuchon est emmanché hermétiquement à l'intérieur de la paroi circonférentielle de la première ouverture d'extrémité,
- le capuchon est disposé à l'extrémité de moulage éloignée du réservoir,
- la jupe tubulaire est en matériau flexible,
- le récipient comprend au moins une zone de pression flexible,
- la au moins une zone de pression flexible correspondant à tout ou partie de 95% de la longueur du tube,
- la surface de positionnement est sur une zone périphérique et/ou une zone centrale du capuchon,
- le capuchon comprend une partie centrale de capuchon recouvrant une extrémité du support de moulage à l'opposé du réservoir, et un manchon de capuchon annulaire entourant une circonférence externe de la partie centrale de capuchon et pourvu d'une partie inférieure pouvant être supportée sur la surface de support, au moins une partie d'une surface circonférentielle externe du manchon de capuchon étant reliée à la paroi circonférentielle de la première ouverture d'extrémité,
- l'épaisseur du capuchon est égale ou supérieure à 1 mm,
- le support de moulage et le capuchon sont constitués d'un même matériau rigide,
- le support de moulage comprend une coque et une jupe externe annulaire disposé autour d'une circonférence externe de la coque et pourvu d'une paroi circonférentielle externe emmanchée hermétiquement sur la paroi circonférentielle de la première ouverture d'extrémité,
- le récipient comprend en outre une tête, une première extrémité de la tête est reliée à la seconde ouverture d'extrémité, et une autre extrémité de la tête est formé d'un orifice de distribution en communication avec le réservoir,
- une extrémité de la tête est reliée à la seconde ouverture d'extrémité par surmoulage,
- la tête loge un essoreur,
- la tête comprend un filet coopérant avec un filet d'un bouchon fermant la deuxième extrémité.

Selon le récipient fourni dans les modes de réalisation de la demande, d'une part, le support de moulage peut jouer un rôle de scellement de la première ouverture d'extrémité de la jupe tubulaire en emmanchant hermétiquement le support de moulage dans la première ouverture d'extrémité de la jupe tubulaire, le réservoir ne peut pas communiquer avec l'extérieur à travers la première ouverture d'extrémité, tandis que le support de moulage joue également un rôle de support de la jupe tubulaire au niveau de la première ouverture d'extrémité, ce qui peut faciliter la connexion entre le capuchon et la première ouverture d'extrémité. D'autre part, la rigidité du capuchon est supérieure à celle de la jupe tubulaire, de sorte que le capuchon peut fermer complètement la première ouverture d'extrémité sans changement de la structure de la première ouverture d'extrémité de la jupe tubulaire, tout en améliorant la rigidité et les performances de support du fond du récipient. Le récipient peut être maintenu verticalement sur la surface de support grâce au capuchon du récipient.

L'invention concerne aussi un dispositif de conditionnement et d'application de produit cosmétique, notamment de mascara.

Le dispositif comprend :
- un récipient tel que décrit ci-dessus, et
- un ensemble applicateur comprenant un bouchon comprenant un organe d'application capable de fermer ou d'ouvrir l'orifice de distribution, et un embout applicateur relié à une extrémité de l'organe d'application, capable de s'étendre dans ou de s'extraire du réservoir à travers l'orifice de distribution.

De façon avantageuse, le bouchon comprend une base, l'organe d'application comprend : un connecteur emmanché dans la base, et une tige pourvu d'une première extrémité s'étendant dans et reliée au connecteur et d'une autre extrémité reliée à l'embout applicateur. La tête, notamment au niveau du goulot, est emmanchée de manière amovible dans le connecteur au moyen d'un raccord fileté, de sorte que l'organe d'application ferme ou ouvre l'orifice de distribution.

De façon avantageuse, l'embout applicateur est un embout applicateur pour mascara et/ou pour un produit à lèvres.

L'invention concerne aussi un procédé de fabrication d'un récipient tel que décrit ci-dessus, dans lequel le support de moulage est d'abord emmanché sur la paroi circonférentielle de la première ouverture d'extrémité, puis un moulage par injection pour former le capuchon est effectué à travers une extrémité du support de moulage éloignée du réservoir au niveau de la paroi circonférentielle de la première ouverture d'extrémité.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un récipient selon un mode de réalisation de l'application,
- la figure 2 est une vue de côté du récipient représentée sur la figure 1,
- la figure 3 est une vue en coupe selon AA de la structure représentée sur la figure 2,
- la figure 4 est une vue agrandie en B de la structure représentée sur la figure 3,
- la figure 5 est vue de côté du récipient de la figure 1 sans bouchon,
- la figure 6 est une vue éclatée en perspective de la figure 5,
- la figure 7 est une vue agrandie de la partie inférieure d'un récipient de la figure 1 selon une variante de réalisation de l'application,
- la figure 8 est une vue agrandie de la partie inférieure d'un récipient de la figure 1 selon une autre variante de réalisation de l'application.

### Description détaillée de l'invention

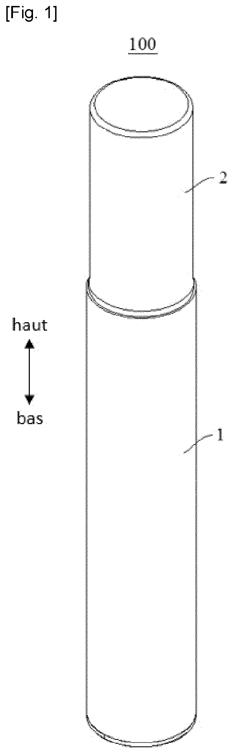

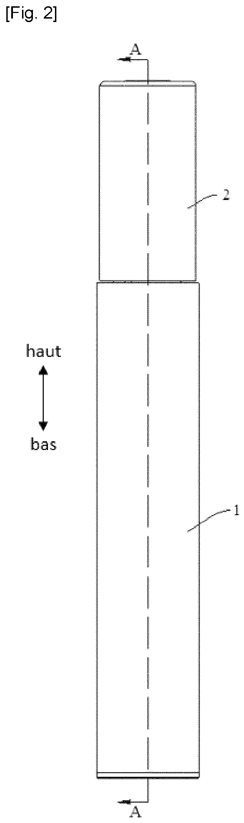

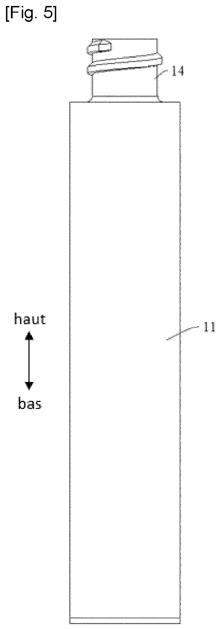

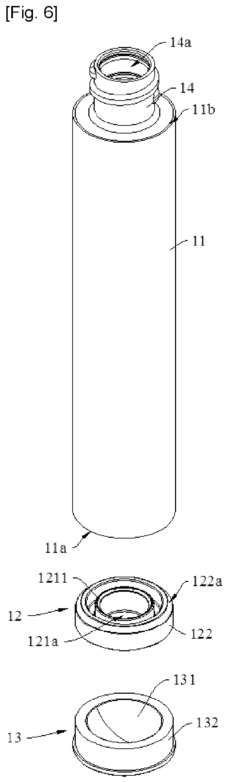

Dans la suite de la description, les termes "haut", "bas", "supérieur", "inférieur" ont des relations d'orientation ou de position basées sur les relations d'orientation ou de position des figures 1 à la 3, et il convient de comprendre que ces termes d'orientation sont uniquement destinés à faciliter et à simplifier la description, et ne sont pas destinés à indiquer ou impliquer qu'un dispositif ou un élément référencé doit avoir une orientation particulière, configurer et fonctionner dans une orientation particulière, et ne peut donc pas être comprise comme une limitation de l'application. Un mode de réalisation de la demande propose un récipient 100. En référence aux figures 1 à 8, le récipient 100 comprend une jupe tubulaire 11, un support de moulage 12 et un capuchon 13, appelé aussi par la suite capuchon inférieur 13. Le récipient 100 est capable de stocker et de contenir des produits cosmétiques. Les produits cosmétiques comprennent, sans s'y limiter, des substances liquides, fluides ou visqueuses telles que du vernis à ongles, du mascara, du rouge à lèvres, de la crème pour le visage, du gel, du fond de teint, du correcteur, de la lotion, de la crème hydratante pour la peau, de la crème solaire, etc.

La jupe tubulaire 11 est formée d'une première ouverture d'extrémité 11a, d'une seconde ouverture d'extrémité 11b opposée à la première ouverture d'extrémité 11a, et d'un réservoir 11c en communication avec la première ouverture d'extrémité 11a et la seconde ouverture d'extrémité 11b. Plus précisément, la jupe tubulaire 11 a une structure cylindrique creuse avec des ouvertures à ses extrémités supérieure et inférieure. Une direction axiale de la jupe tubulaire 11 est conforme avec une direction supérieure-inférieure, et une paroi circonférentielle interne de la jupe tubulaire 11 forme le réservoir 11c en l'entourant.

La première ouverture d'extrémité 11a est située dans une partie inférieure du récipient. Elle obturée de manière étanche par le capuchon inférieur 13.

Le support de moulage 12 est doté d'une paroi circonférentielle externe emmanchée sur une paroi circonférentielle de la première ouverture d'extrémité 11a. Autrement dit, le support de moulage 12 est situé dans une partie inférieure de la jupe tubulaire 11. Il est emmanché dans la première ouverture d'extrémité 11a et est lié à la paroi circonférentielle de la première ouverture d'extrémité 11a.

De préférence, la paroi circonférentielle externe est emmanchée hermétiquement sur la paroi circonférentielle de la première ouverture d'extrémité 11a. Autrement dit, le support de moulage 12 est lié hermétiquement à la paroi circonférentielle de la première ouverture d'extrémité 11a.

Après l'emmanchement, lorsqu'une paroi circonférentielle externe de la jupe tubulaire 11 au niveau de la première ouverture d'extrémité 11a est soumise à une pression dans une direction radiale, le support de moulage 12 situé dans la première ouverture d'extrémité 11a peut fournir un support à la jupe tubulaire 11 dans la direction radiale, pour éviter la déformation de la première ouverture d'extrémité 11a, tandis que le réservoir 11c ne peut pas communiquer avec l'extérieur à travers la première ouverture d'extrémité 11a.

Le capuchon inférieur 13 est disposé à une extrémité du support de moulage 12, ici éloigné du réservoir 11c, et sur la paroi circonférentielle de la première ouverture d'extrémité 11a.

Selon l'invention, le capuchon inférieur 13 est surmoulé à la fois sur le support de moulage 12 et sur ladite paroi circonférentielle de la première ouverture d'extrémité 11a.

De façon avantageuse, la partie inférieure du récipient comprend une surface de positionnement permettant le maintien stable du récipient sur un support plan.

De préférence, la surface de positionnement est sur une zone périphérique et/ou une zone centrale du capuchon.

Ici, le capuchon inférieur 13 est pourvu d'une partie inférieure pouvant être supportée sur une surface de support, par exemple un support plan, sur laquelle l'utilisateur peut déposer le récipient 100 debout. Plus précisément, la surface de support est une surface parallèle à une direction horizontale, et une extrémité inférieure du capuchon inférieur 13 peut être un plan perpendiculaire à la direction axiale de la jupe tubulaire 11, ou peut avoir une structure de plusieurs branches avec les mêmes hauteurs horizontales, de sorte que le récipient 100 puisse se tenir debout sur la surface de support par l'intermédiaire du capuchon inférieur 13. De plus, le capuchon inférieur 13 est simultanément relié à l'extrémité du support de moulage 12 éloigné du réservoir 11c et à la paroi circonférentielle de la première ouverture d'extrémité 11a, fermant ainsi complètement la première ouverture d'extrémité 11a, de sorte que le capuchon inférieur 13, le support de moulage 12 et la première ouverture d'extrémité 11a forment ensemble le fond du récipient 100.

La rigidité du capuchon inférieur 13 est relativement supérieure à celle de la jupe tubulaire 11, améliorant la rigidité et les performances de support du fond du récipient 100, sans changer la forme structurelle de la première ouverture d'extrémité 11a de la jupe tubulaire 11.

Dans un mode de réalisation, la jupe tubulaire 11 est constituée d'un matériau flexible et/ou, le support de moulage 12 est constitué d'un matériau rigide et/ou le capuchon inférieur 13 est constitué d'un matériau rigide.

La flexibilité du matériau composant la jupe tubulaire 11 fait référence à la souplesse du matériau de la jupe tubulaire 11, de sorte que le matériau peut être facilement déformé, ou plié ou écrasé sans se casser, notamment par un appui, une pression d'une main, d'un doigt de l'utilisateur, par exemple pour amener du produit cosmétique sur l'embout applicateur 22. Par exemple, dans le cas du récipient 100, lorsque du liquide est injecté dans le réservoir 11c de la jupe tubulaire 11, ou lorsqu'une pression est appliquée dessus avec les doigts ou les mains, la jupe tubulaire 11 change de forme sans se casser.

La rigidité du matériau composant le support de moulage 12 et/ou le capuchon inférieur 13 fait référence à un matériau qui ne peut pas être déformé par la pression atmosphérique ou la pression appliquée par les doigts ou les mains d'un utilisateur. De façon avantageuse, le récipient comprend ainsi au moins une zone de pression flexible. Autrement dit, au moins en une zone, notamment au niveau de la jupe tubulaire, une pression peut être exercée sans que le matériau s'abime, casse, perce ou se détériore. Il peut s'agir, par exemple, d'une pression appliquée sur la zone de pression flexible avec les doigts ou les mains provoquant un changement de forme, tel qu'un écrasement ou un pincement, de la jupe tubulaire 11.

De façon avantageuse, la au moins une zone de pression flexible correspondant à tout ou partie de 95% de la longueur du tube.

De préférence, la au moins une zone de pression flexible est exempte, dans un plan radial, d'éléments rigides.

Les procédés de fabrication de la jupe tubulaire 11 ne sont pas spécifiquement limités. Dans un mode de réalisation, la jupe tubulaire 11 est fabriqué à partir d'une bande plane mince, de préférence rectangulaire. La bande plane est roulée en une forme tubulaire, puis deux bords latéraux opposés de la bande plane sont reliés ensemble, de sorte qu'une jupe tubulaire cylindrique 11 formée avec des ouvertures aux deux extrémités peut être fabriquée. Les deux bords latéraux de la bande sont assemblés par une soudure longitudinale de sorte à former la jupe tubulaire 11. La soudure longitudinale peut être obtenue en superposant les bords latéraux ou en plaçant les bords latéraux en regard l'un de l'autre.

Dans un autre mode de réalisation, la jupe tubulaire 11 est fabriqué par moulage par extrusion.

Dans un mode de réalisation, la jupe tubulaire 11 est constituée d'un matériau multicouche qui comprend, sans toutefois s'y limiter, les matières plastiques multicouches. Plus précisément, le matériau multicouche de la jupe tubulaire 11 comprend au moins une couche interne, une couche barrière et une couche externe, la couche barrière étant prise en sandwich entre la couche interne et la couche externe le long d'une direction d'épaisseur d'une paroi de tube de la jupe tubulaire 11. La couche interne est constituée d'un matériau polyéthylène, par exemple, la couche interne est constituée de polyéthylène haute densité avec une proportion de 80% et de polyéthylène basse densité avec une proportion de 20%. La couche externe est également constituée d'un matériau polyéthylène, par exemple, la couche externe est constituée de polyéthylène haute densité avec une proportion de 100 %. La couche barrière comprend, sans s'y limiter, une couche d'éthylène - alcool vinylique (EVOH) ou une couche d'aluminium. Par exemple, la couche barrière est constituée d'éthylène - alcool vinylique qui est un polymère à effet barrière vis-à-vis de l'oxygène et des arômes et peut limiter la perte de parfum ou de saveur d'un produit emballé.

Dans un mode de réalisation, les matériaux du support de moulage 12 incluent, sans s'y limiter, l'utilisation d'un matériau en polyéthylène.

Dans un mode de réalisation, les matériaux du capuchon inférieur 13 comprennent, sans s'y limiter, l'utilisation d'un matériau en polyéthylène.

De préférence, le support de moulage 12 et le capuchon inférieur 13 sont constitués d'un même matériau rigide.

La fermeture d'un fond d'un récipient constitué d'un matériau flexible est généralement réalisée par soudage par fusion à haute pression dans des conditions de chauffage pour former un fond en forme de crête. En raison du fond en forme de crête, le récipient ne peut pas être placé verticalement, ce qui peut entraîner un processus d'emballage et de transport plus complexe. Par exemple, le récipient doit être emballé en plaçant le récipient à l'envers pendant l'emballage, c'est-à-dire le bouchon vers le bas. Lorsque le bouchon n'a pas non plus de surface plane, il peut nécessiter d'autres éléments de fixation pour faciliter l'emballage lors de l'emballage du récipient.

En outre, lorsque le récipient est un récipient destiné à stocker des produits cosmétiques tels que du mascara, du rouge à lèvres, etc., c'est-à-dire un récipient comprenant un élément structurel pour retirer les produits cosmétiques, telle qu'un embout applicateur, lorsque le récipient constitué du matériau flexible est déformé par une force externe, il y aura un risque d'endommager l'élément structurel du récipient.

Selon le récipient 100 prévu dans le mode de réalisation de la demande, d'une part, le support de moulage 12 peut jouer un rôle de scellement de la première ouverture d'extrémité 11a de la jupe tubulaire 11 en emmanchant hermétiquement le support de moulage 12 dans la première ouverture d'extrémité 11a de la jupe tubulaire 11, le réservoir 11c ne peut pas communiquer avec l'extérieur à travers la première ouverture d'extrémité 11a.

D'autre part, le support de moulage 12 joue également un rôle de support de la jupe tubulaire 11 au niveau de la première ouverture d'extrémité 11a, ce qui peut faciliter la connexion entre le capuchon inférieur 13 et la première ouverture d'extrémité 11a. De plus, la rigidité du capuchon inférieur 13 est supérieure à celle de la jupe tubulaire 11, de sorte que le capuchon inférieur 13 peut fermer complètement la première ouverture d'extrémité 11a sans changer la forme structurelle au niveau de la première ouverture d'extrémité 11a de la jupe tubulaire 11, tout en améliorant la rigidité et les performances de support du fond du récipient 100. Le récipient 100 peut être supporté sur la surface de support verticalement grâce au capuchon inférieur 13 du récipient 100.

Dans un mode de réalisation, le capuchon inférieur 13 est formé en une partie intégrante du support de moulage 12 et de la première ouverture d'extrémité 11a par un processus de moulage par injection. Par exemple, le support de moulage 12 est d'abord emmanché, de préférence hermétiquement, sur la paroi circonférentielle de la première ouverture d'extrémité 11a, puis un moulage par injection pour former le capuchon inférieur 13 est effectué à travers l'extrémité du support de moulage 12 éloigné du réservoir 11c au niveau de la paroi circonférentielle de la première ouverture d'extrémité 11a. Plus précisément, l'extrémité du support de moulage 12 éloigné du réservoir 11c et la paroi circonférentielle de la première ouverture d'extrémité 11a forment une surface en forme de cavité pour le moulage par injection d'une extrémité supérieure du capuchon inférieur 13, et un noyau de moulage d'une machine de moulage par injection forme une surface en forme de cavité pour l'extrémité inférieure du capuchon inférieur 13. Une fois que les deux surfaces en forme de cavité des extrémités supérieure et inférieure du capuchon inférieur 13 sont alignées et fermées ensemble, une cavité (c'est-à-dire un moule) pour le moulage par injection du capuchon inférieur 13 est formée. Ensuite, les matières premières fondues pour le moulage par injection sont versées dans la cavité pour effectuer le moulage par injection. Le moule est ouvert une fois les matières premières pour le moulage par injection refroidies. Par conséquent, le capuchon inférieur 13 lié respectivement au support de moulage 12 et à la première ouverture d'extrémité 11a est formé.

Les structures d'un côté du capuchon inférieur 13 relié au support de moulage 12 et la première ouverture d'extrémité 11a correspondent aux formes de contour du support de moulage 12 et de la première ouverture d'extrémité 11a respectivement. Les structures du côté du capuchon inférieur 13 éloigné du support de moulage 12 et de la première ouverture d'extrémité 11a ne sont pas particulièrement limités, par exemple, l'extrémité inférieure du capuchon inférieur 13 peut être un plan perpendiculaire à la direction axiale de la jupe tubulaire 11. A titre d'exemple, dans un mode de réalisation, l'épaisseur du capuchon inférieur 13 est égale ou supérieure à 1 mm. C'est-à-dire que le capuchon inférieur 13 est une couche de revêtement d'une certaine épaisseur qui recouvre une extrémité inférieure du support de moulage 12 et la paroi circonférentielle de la première ouverture d'extrémité 11a après moulage par injection, et l'épaisseur de la couche de revêtement est égale ou supérieure à 1 mm.

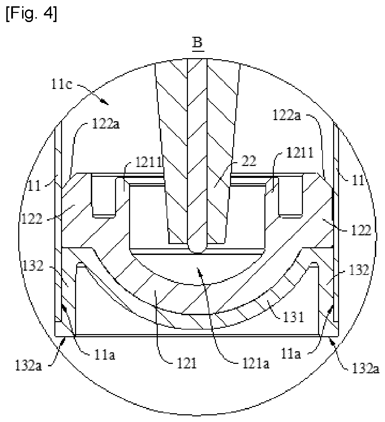

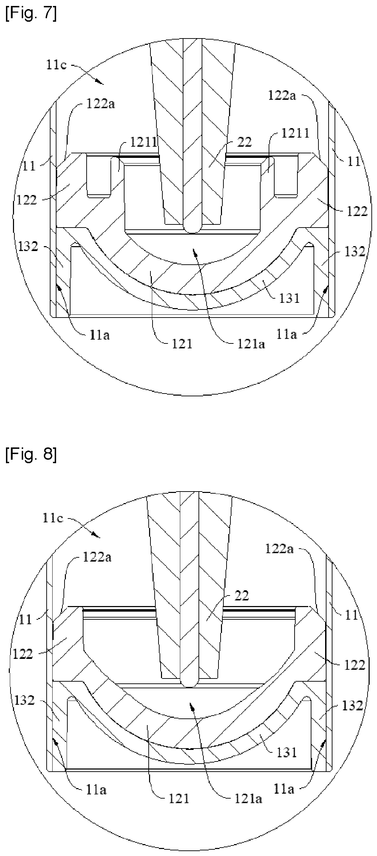

Dans un mode de réalisation, en référence à la figure 4, ainsi que dans les variante s de réalisation illustrées aux figures 7 et 8, le capuchon inférieur 13 comprend une partie centrale de capuchon 131 et un manchon de capuchon 132 annulaire. La partie centrale de capuchon 131 recouvre l'extrémité du support de moulage 12 à l'opposé du réservoir 11c. Le manchon de capuchon 132 entoure une circonférence externe de la partie centrale de capuchon 131.

Le manchon de capuchon 132 est pourvu d'une partie inférieure pouvant être supportée sur la surface de support.

De plus, au moins une partie d'une surface circonférentielle externe du manchon de capuchon 132 est reliée à la paroi circonférentielle de la première ouverture d'extrémité 11a.

De façon avantageuse, le contour de la partie centrale de capuchon 131 forme une couche de revêtement complémentaire au contour de l'extrémité inférieure du support de moulage 12, et la surface externe circonférentielle externe du manchon de capuchon 132 forme une couche de revêtement reliée à la paroi circonférentielle de la première ouverture d'extrémité 11a.

L'épaisseur de chacun de la partie centrale de capuchon 131 et du manchon de capuchon 132 est égale ou supérieure à 1 mm, de sorte que le capuchon inférieur 13 ait une rigidité plus élevée que la jupe tubulaire 11. Après le moulage par injection, le capuchon inférieur 13 est relié au support de moulage 12 et à la première ouverture d'extrémité 11a, de sorte que sa résistance soit plus élevée et ses performances de support meilleures.

Dans l'exemple illustré aux figures 1 à 6, le fond du manchon de capuchon 132 est formé avec un plan annulaire 132a couvrant une extrémité axiale de la première ouverture d'extrémité 11a, et le récipient 100 peut être supporté sur la surface de support verticalement grâce au plan annulaire 132a du capuchon inférieur 13.

Dans des variantes de réalisation illustrées aux figures 7 et 8, le fond du manchon de capuchon 132 est dépourvu de plan annulaire 132a. La jupe tubulaire 11 descend jusqu'au bord inférieur du manchon de capuchon 132. Le récipient 100 est alors supporté sur la surface de support verticalement grâce à une périphérie inférieure du capuchon inférieur 13 délimitée par le bord inférieur de celui-ci.

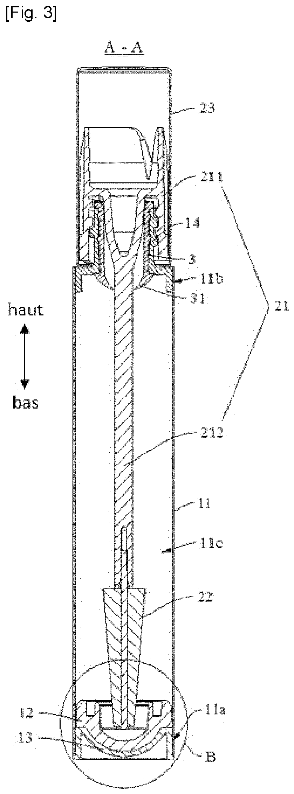

Dans un mode de réalisation, en référence aux figures 3, 4,7 et 8, le support de moulage 12 comprend une coque 121 et une jupe externe 122 annulaire. La jupe externe122 est disposée autour d'une circonférence externe de la coque 121 et est pourvu d'une paroi circonférentielle externe emmanchée hermétiquement sur la paroi circonférentielle de la première ouverture d'extrémité 11a. Plus précisément, les structures et les formes de la coque 121 ne sont pas particulièrement limitées. La coque 121 peut être une structure en forme de plaque disposée dans la direction horizontale, ou peut être une structure avec d'autres formes. Une extrémité inférieure de la jupe externe 122 est relié à un bord circonférentiel externe de la coque 121, et une extrémité supérieure de la jupe externe 122 s'étend vers le haut le long de la direction axiale de la jupe tubulaire 11 en direction de la seconde ouverture d'extrémité 11b. La jupe externe 122 permet d'augmenter une zone de contact entre le support de moulage 12 et la paroi circonférentielle de la première ouverture d'extrémité 11a, obtenant ainsi une meilleure performance d'étanchéité.

Dans un mode de réalisation, en référence aux figures 3, 4 et 7, la coque 121 est formée avec une bride annulaire 1211 s'étendant vers la deuxième ouverture d'extrémité 11b. Plus précisément, la bride annulaire 1211 est située sur une surface d'un côté de la coque 121 éloignée de la première ouverture d'extrémité 11a, et une colonne de support peut être emmanchée dans la bride annulaire 1211.

Lors du moulage par injection du capuchon inférieur 13, il peut être avantageux de fournir une structure de support telle qu'une colonne de support en forme de tige. La colonne de support est alors supportée à une extrémité du support de moulage 12 éloigné de la première ouverture d'extrémité 11a pour faciliter le positionnement axial du support de moulage 12 au niveau de la première ouverture d'extrémité 11a de la jupe tubulaire 11. De façon avantageuse, la bride annulaire 1211 peut servir à cet effet. La bride annulaire 1211 est alors emmanchée avec la colonne de support facilitant l'installation et le maintien de la colonne de support.

À titre d'exemple, dans un mode de réalisation, lors du moulage par injection du capuchon inférieur 13, la colonne de support s'étend dans la jupe tubulaire 11 à partir de la deuxième ouverture d'extrémité 11b, puis est emmanchée dans la bride annulaire 1211, de sorte que le support de moulage 12 soit disposé dans une position prédéfinie au niveau de la première ouverture d'extrémité 11a, évitant ainsi l'apparition d'un glissement axial du support de moulage 12 le long de la jupe tubulaire 11 pendant le moulage par injection du capuchon inférieur 13. La bride annulaire 1211 peut contraindre une position prédéfinie où la colonne de support est supportée sur le support de moulage 12, garantissant que la colonne de support est supportée de manière fiable à l'extrémité du support de moulage 12 éloigné de la première ouverture d'extrémité 11a pendant le moulage par injection du capuchon inférieur 13. Après le moulage par injection du capuchon inférieur 13, la colonne de support est séparée de la bride annulaire 1211 et est sortie par la deuxième ouverture d'extrémité 11b.

Dans une variante de réalisation illustrée à la figure 8, la coque 121 ne comprend pas de bride annulaire 1211. Lors du moulage par injection du capuchon inférieur 13, la colonne de support repose alors directement sur la coque 121.

Dans un mode de réalisation, en référence aux figures 3, 4, 7 et 8, une extrémité de la jupe externe 122 éloignée de la coque 121 est formée avec une surface de guidage annulaire 122a configurée pour guider la jupe externe 122 lors de son emmanchement dans la première ouverture d'extrémité 11a. La surface de guidage annulaire 122a peut faciliter le montage et l'emmanchement du support de moulage 12 dans la première ouverture d'extrémité 11a. Sur un plan de projection perpendiculaire dans la direction axiale de la jupe tubulaire 11, une zone de contour de projection d'une extrémité supérieure de la surface de guidage annulaire 122a est plus petite qu'une zone de contour de projection d'une extrémité inférieure de la surface de guidage annulaire 122a. La surface de guidage annulaire 122a peut être une surface annulaire en forme d'arc ou conique avec une transition douce du haut vers le bas.

Dans un mode de réalisation, en référence aux figures 3, 4, 7 et 8, la coque 121 est formée d'un creux 121a ouvert vers le réservoir 11c. Plus précisément, le creux 121a communique avec le réservoir 11c, et une zone centrale de la coque 121 est enfoncée dans une direction opposée au réservoir 11c pour former le creux 121a. Dans la variante de réalisation illustrée aux figures 3, 4 et 7, la bride annulaire 1211 est agencée pour entourer une circonférence extérieure du creux 121a. Le creux 121a et la bride annulaire 1211 forme ainsi un espace permettant ensemble de faciliter davantage l'installation de la colonne de support pour le prépositionnement axial du support de moulage 12 lors du moulage par injection du capuchon inférieur 13.

La forme d'une surface inférieure du creux 121a n'est pas particulièrement limitée et comprend, sans s'y limiter, un plan plat, une surface en forme d'arc, une surface conique, etc. À titre d'exemple, dans un mode de réalisation, en référence aux figures 3, 4, 7 et 8, la surface inférieure du creux 121a est une surface sphérique. Plus précisément, la surface sphérique est une surface sphérique concave déprimée dans la direction opposée au réservoir 11c. Ainsi, lorsque la première ouverture d'extrémité 11a est comprimée par une force externe le long de la direction axiale ou radiale de la jupe tubulaire 11, le creux 121a de la coque 121 de forme sphérique peut réduire les contraintes de la coque 121, améliore la résistance à la compression de l'ensemble de la coque 121, améliore les performances de support/maintien du support de moulage 12, et évite grandement l'apparition d'une déformation de la jupe tubulaire 11 au niveau de la première ouverture d'extrémité 11a. En outre, le creux 121a de forme sphérique n'occupe pas trop l'espace à l'intérieur de la jupe tubulaire 11, et le volume de stockage du réservoir 11c reste volumineux.

Dans un mode de réalisation, en référence aux figures 3,5 et 6, le récipient 100 comprend en outre une tête 14, une première extrémité de la tête 14 est reliée à la seconde ouverture d'extrémité 11b, et une autre extrémité de la tête 14 est formée d'un orifice de distribution 14a en communication avec le réservoir 11c.

Plus précisément, la tête 14 comprend une épaule et un goulot. L'épaule est la partie de la tête reliée à la jupe tubulaire au niveau de la seconde ouverture d'extrémité 11b. Le goulot est l'extrémité de la tête 14 formée d'un orifice de distribution 14a. Plus précisément, la tête 14 est reliée à la jupe tubulaire 11 par moulage par injection au niveau de l'épaule. De préférence, la tête est surmoulée sur la deuxième extrémité de la jupe tubulaire.

La tête 14 a une structure tubulaire creuse avec des ouvertures à ses extrémités supérieure et inférieure. La tête 14 est constitué d'un matériau rigide pour améliorer la résistance structurelle du récipient 100 au niveau de la seconde ouverture d'extrémité 11b de la jupe tubulaire 11.

Comme illustré ici, le récipient peut être assemblé avec un ensemble applicateur et formé un dispositif de conditionnement et d'application de produit cosmétique, notamment de mascara ou de produit pour les lèvres.

L'ensemble applicateur comprend un bouchon 2, le bouchon 2 comprend un organe d'application 21 et un embout applicateur 22. L'organe d'application 21 est capable de fermer ou d'ouvrir l'orifice de distribution 14a. L'embout applicateur 22 est relié à une extrémité de l'organe d'application 21 et est capable de s'étendre dans ou de s'extraire du réservoir 11c à travers l'orifice de distribution 14a. L'embout applicateur 22 est au moins partiellement situé dans le creux 121a lorsque l'organe d'application 21 ferme l'orifice de distribution 14a. Plus précisément, l'embout applicateur 22 peut être un embout applicateur pour mascara comme une brosse et/ou pour produit à lèvres. L'embout applicateur 22 peut être floqué ou non et/ou comprendre des protubérances faisant saillie radialement de la surface de l'embout applicateur 22. Dans ce cas, lorsque l'organe d'application 21 ferme l'orifice de distribution 14a, l'embout applicateur 22 est situé dans le réservoir 11c et lorsque l'organe d'application 21 ouvre l'orifice de distribution 14a, l'embout applicateur 22 suit l'organe d'application 21 pour être retiré du réservoir 11c à travers l'orifice de distribution 14a. Après le retrait de l'embout applicateur 22 a de l'orifice de distribution 14a, le produit cosmétique embarqué sur l'embout applicateur 22 peut être appliqué par l'utilisateur.

Lorsque le récipient 100 est un récipient destiné à stocker des produits cosmétiques tels que du mascara, du rouge à lèvres, etc., l'embout applicateur 22 pour prélever des produits cosmétiques est généralement logée dans le récipient 100. Lorsque la jupe tubulaire 11 est constituée d'un matériau flexible, la jupe tubulaire 11 se déforme facilement lorsqu'elle est soumise à une force externe et il y a, alors, un risque d'endommager l'embout applicateur 22 à l'intérieur de la jupe tubulaire 11. Le creux 121a est constituée d'un matériau rigide, et l'embout applicateur 22 est au moins partiellement disposé dans le creux 121a, de sorte que le creux 121a puisse jouer un rôle de support et de protection de l'embout applicateur 22, en évitant une compression et/ou un écrasement de l'embout applicateur 22 à l'intérieur de la jupe tubulaire 11.

Dans un autre mode de réalisation non illustré, l'embout applicateur 12 est éloigné du creux 121a.

À titre d'exemple, dans un mode de réalisation, en référence à la figure 3, le bouchon 2 comprend une base 23, l'organe d'application 21 comprend un connecteur 211 et une tige 212. Le connecteur 211 est emmanché dans la base 23. La tige 212 est pourvu d'une première extrémité s'étendant dans et reliée au connecteur 211, et d'une autre extrémité reliée à l'embout applicateur 22. La tête 14, notamment au niveau du goulot, est emmanchée de manière amovible dans le connecteur 211 au moyen d'un raccord fileté, de sorte que l'organe d'application 21 ferme ou ouvre l'orifice de distribution 14a. Plus précisément, une paroi circonférentielle externe de la tête 14, ici au niveau du goulot, est formée avec des filetages externes, une paroi circonférentielle interne du connecteur 211 est formée avec des filetages internes. Les filetages externes sont emmanchés par filetage sur les filetages internes. La tête 14 et l'organe d'application 21 ne peuvent être séparés ou assemblés que par rotation relative, ce qui empêche la tête 14 d'être séparée de l'organe d'application 21 lorsque le récipient 100 est accidentellement soumis à une force externe importante. Autrement dit, le récipient 100 ne peut être ouvert ou fermé que par rotation relative de la tête 14 et de l'organe d'application 21, ce qui empêche le récipient 100 d'être ouvert lorsque le récipient 100 est accidentellement soumis à une force externe importante. La liaison entre la tête 14 et l'organe d'application 21 a une grande fiabilité.

Dans un mode de réalisation, en référence à la figure 3, le récipient 100 comprend en outre un essoreur 3, l'essoreur 3 est logé dans la tête 14.

Plus précisément, l'essoreur 3 est situé au niveau de l'orifice de distribution 14a et est emmanché sur une surface de paroi interne de la tête 14, au niveau du goulot. Lorsque l'organe d'application 21 recouvre le réservoir 11c, l'essoreur 3 peut sceller un espace entre l'organe d'application 21 et le goulot de la tête 14. L'essoreur 3 assure l'étanchéité du récipient 100 et permet ainsi d'empêcher des fuites de substances hors du réservoir 11c.

Les matériaux de l'essoreur 3 ne sont pas limités. Par exemple, des matériaux en caoutchouc ou en silicone peuvent être choisis comme matériaux de l'essoreur 3. Dans un mode de réalisation, en référence à la figure 3, l'extrémité inférieur de l'essoreur 3 est resserrée pour former une partie de raclage 31, et un diamètre intérieur minimum de la partie de raclage 31 est inférieur à un diamètre extérieur maximum de l'embout applicateur 22.

De cette manière, lorsque l'utilisateur retire l'embout applicateur 22 pour l'utiliser, la partie de raclage 31 peut entrer en contact avec l'embout applicateur 22, et l'utilisateur peut ajuster la quantité de produit cosmétique emmagasinée par l'embout applicateur 22, améliorant le confort d'utilisation de l'utilisateur et réduisant le gaspillage de produit cosmétique provoqué par un trempage excessif.

La description ci-dessus n'est que des modes de réalisation spécifiques de l'application, cependant, l'étendue de la protection n'y est pas limitée. Les variations ou substitutions facilement concevables par toute personne technique familiarisée avec ce domaine technique doivent entrer dans le champ de protection de la demande, tel que définie par les revendications.

## Revendications

1. Récipient (100) pour un produit cosmétique, comprenant une jupe tubulaire (11) formant un réservoir (11c) pour la réception du produit cosmétique (11) et comprenant en outre une première ouverture d'extrémité (11a), et une seconde ouverture d'extrémité (11b) opposée à la première ouverture d'extrémité (11a),
la première ouverture d'extrémité (11b) étant située dans une partie inférieure du récipient et obturée de manière étanche par un capuchon (13) présentant une rigidité supérieure à celle de la jupe tubulaire (11),
**caractérisé en ce que** la partie inférieure du récipient comprend un support de moulage (12) emmanché à l'intérieur d'une paroi circonférentielle de la première ouverture d'extrémité (11a), et
ledit capuchon (13) est disposé à une extrémité du support de moulage et sur la paroi circonférentielle de la première ouverture d'extrémité (11a) et surmoulé à la fois sur le support de moulage et sur ladite paroi circonférentielle.

2. Récipient (100) selon la revendication 1, dans lequel la partie inférieure du récipient comprend une surface de positionnement permettant le maintien stable du récipient sur un support plan.

3. Récipient (100) selon l'une quelconque des revendications précédentes, dans lequel la jupe tubulaire est en matériau flexible

4. Récipient (100) selon la revendication précédente comprenant au moins une zone de pression flexible.

5. Récipient (100) selon la revendication précédente, dans lequel la au moins une zone de pression flexible correspondant à tout ou partie de 95% de la longueur du tube.

6. Récipient (100) selon l'une quelconque des revendications 2 à 5, dans lequel la surface de positionnement est sur une zone périphérique et/ou une zone centrale du capuchon.

7. Récipient (100) selon l'une quelconque des revendications précédentes, dans lequel le capuchon (13) comprend une partie centrale de capuchon (131) recouvrant une extrémité du support de moulage(12) à l'opposé du réservoir (11c), et un manchon de capuchon (132) annulaire entourant une circonférence externe de la partie centrale de capuchon (131) et pourvu d'une partie inférieure pouvant être supportée sur la surface de support, au moins une partie d'une surface circonférentielle externe du manchon de capuchon (132) étant reliée à la paroi circonférentielle de la première ouverture d'extrémité (11a).

8. Récipient (100) selon l'une quelconque des revendications précédentes, dans lequel l'épaisseur du capuchon (13) est égale ou supérieure à 1 mm.

9. Récipient (100) selon l'une quelconque des revendications précédentes, dans lequel le support de moulage (12) et le capuchon (13) sont constitués d'un même matériau rigide

10. Récipient (100) selon l'une quelconque des revendications précédentes, dans lequel le support de moulage (12) comprend une coque (121) et une jupe externe 122 annulaire (122) disposé autour d'une circonférence externe de la coque (121) et pourvu d'une paroi circonférentielle externe emmanchée hermétiquement sur la paroi circonférentielle de la première ouverture d'extrémité (11a).

11. Récipient (100) selon l'une quelconque des revendications précédentes dans lequel le récipient (100) comprend en outre une tête (14), une première extrémité de la tête (14) est reliée à la seconde ouverture d'extrémité (11b), et une autre extrémité de la tête (14) est formé d'un orifice de distribution (14a) en communication avec le réservoir (11c).

12. Récipient (100) selon la revendication précédente, dans lequel une extrémité de la tête (14) est reliée à la seconde ouverture d'extrémité (11b) par surmoulage.

13. Dispositif de conditionnement et d'application de produit cosmétique, notamment de mascara, comprenant :
- un récipient (100) selon l'une des revendications 1 à 12,
- un ensemble applicateur comprend un bouchon (2) comprenant un organe d'application (21) capable de fermer ou d'ouvrir l'orifice de distribution (14a), et un embout applicateur (22) relié à une extrémité de l'organe d'application (21), capable de s'étendre dans ou de s'extraire du réservoir (11c) à travers l'orifice de distribution (14a).

14. Dispositif selon la revendication précédente dans lequel le bouchon (2) comprend une base (23), l'organe d'application (21) comprend : un connecteur (211) emmanché dans la base (23), et une tige (212) pourvu d'une première extrémité s'étendant dans et reliée au connecteur (211) et d'une autre extrémité reliée à l'embout applicateur (22), la tête (14) est emmanchée de manière amovible dans le connecteur (211) au moyen d'un raccord fileté, de sorte que l'organe d'application (21) ferme ou ouvre l'orifice de distribution (14a).

15. Dispositif selon la revendication précédente, dans lequel l'embout applicateur (22) est un embout applicateur pour mascara et/ou pour produit à lèvres.

16. Procédé de fabrication d'un récipient (100) selon l'une quelconque des revendications1 à 12, dans lequel le support de moulage (12) est d'abord emmanché sur la paroi circonférentielle de la première ouverture d'extrémité (11a), puis un moulage par injection pour former le capuchon (13) est effectué à travers une extrémité du support de moulage (12) éloignée du réservoir (11c) au niveau de la paroi circonférentielle de la première ouverture d'extrémité (11a).

## Patentansprüche

1. Behälter (100) für ein kosmetisches Produkt, umfassend einen rohrförmigen Schaft (11), der ein Reservoir (11c) zur Aufnahme des kosmetischen Produkts bildet und weiter umfassend eine erste Endöffnung (11a) und eine zweite Endöffnung (11b), die der ersten Endöffnung (11a) gegenüberliegt, wobei die erste Endöffnung (11b) in einem unteren Teil des Behälters angeordnet und durch einen Verschluss (13), der eine höhere Steifigkeit als jene des rohrförmigen Schafts (11) aufweist, dicht verschlossen ist,
**dadurch gekennzeichnet, dass** der untere Teil des Behälters einen Formgebungsträger (12) umfasst, der im Inneren einer Umfangswand der ersten Endöffnung (11a) eingesteckt ist, und
der Verschluss (13) an einem Ende des Formgebungsträgers und auf der Umfangswand der ersten Endöffnung (11a) angeordnet und sowohl auf den Formgebungsträger als auch auf die Umfangswand umgespritzt ist.

2. Behälter (100) nach Anspruch 1, wobei der untere Teil des Behälters eine Positionierfläche umfasst, die die stabile Haltung des Behälters auf einer ebenen Unterlage ermöglicht.

3. Behälter (100) nach einem der vorstehenden Ansprüche, wobei der rohrförmige Schaft aus flexiblem Material besteht.

4. Behälter (100) nach dem vorstehenden Anspruch, umfassend mindestens eine flexible Druckzone.

5. Behälter (100) nach dem vorstehenden Anspruch, wobei die mindestens eine flexible Druckzone ganz oder teilweise 95 % der Länge des Schafts entspricht.

6. Behälter (100) nach einem der Ansprüche 2 bis 5, wobei die Positionierfläche auf einer peripheren Zone und/oder einer zentralen Zone des Verschlusses liegt.

7. Behälter (100) nach einem der vorstehenden Ansprüche, wobei der Verschluss (13) einen zentralen Verschlussteil (131), der ein Ende des Formgebungsträgers (12) dem Reservoir (11c) gegenüber abdeckt, und eine ringförmige Verschlusshülse (132), die einen äußeren Umfang des zentralen Verschlussteils (131) umgibt und mit einem unteren Teil versehen ist, der auf der Auflagefläche abgestützt werden kann, umfasst, wobei mindestens ein Teil einer äußeren Umfangsfläche der Verschlusshülse (132) mit der Umfangswand der ersten Endöffnung (11a) verbunden ist.

8. Behälter (100) nach einem der vorstehenden Ansprüche, wobei die Dicke des Verschlusses (13) gleich oder größer als 1 mm ist.

9. Behälter (100) nach einem der vorstehenden Ansprüche, wobei der Formgebungsträger (12) und der Verschluss (13) aus einem gleichen starren Material bestehen.

10. Behälter (100) nach einem der vorstehenden Ansprüche, wobei der Formgebungsträger (12) eine Schale (121) und eine ringförmige Außenhülse (122) umfasst, die um einen äußeren Umfang der Schale (121) angeordnet und mit einer äußeren Umfangswand versehen ist, die dicht auf die Umfangswand der ersten Endöffnung (11a) aufgesteckt ist.

11. Behälter (100) nach einem der vorstehenden Ansprüche, wobei der Behälter (100) weiter einen Kopf (14) umfasst, ein erstes Ende des Kopfes (14) mit der zweiten Endöffnung (11b) verbunden ist und ein anderes Ende des Kopfes (14) als eine mit dem Reservoir (11c) in Verbindung stehende Ausgabeöffunung (14a) ausgebildet ist.

12. Behälter (100) nach dem vorstehenden Anspruch, wobei ein Ende des Kopfes (14) mit der zweiten Endöffnung (11b) durch Umspritzen verbunden ist.

13. Vorrichtung zur Verpackung und Applikation eines kosmetischen Produkts, insbesondere von Mascara, umfassend:
- einen Behälter (100) nach einem der Ansprüche 1 bis 12,
- eine Applikatoranordnung umfasst einen Stopfen (2) umfassend einem Applikatorelement (21), das geeignet ist, die Ausgabeöffunung (14a) zu verschließen oder zu öffnen, und eine mit einem Ende des Applikatorelements (21) verbundene Applikatorspitze (22), die geeignet ist, sich in das Reservoir (11c) hinein oder aus diesem heraus durch die Ausgabeöffunung (14a) zu erstrecken.

14. Vorrichtung nach dem vorstehenden Anspruch, wobei der Stopfen (2) eine Basis (23) umfasst, das Applikatorelement (21) umfasst: einen in die Basis (23) eingesteckten Verbinder (211) und eine Stange (212), die mit einem ersten Ende, das sich in den Verbinder (211) erstreckt und mit diesem verbunden ist, und einem anderen Ende, das mit der Applikatorspitze (22) verbunden ist, versehen ist, der Kopf (14) ist mittels eines Gewindeverbinders lösbar in den Verbinder (211) eingesteckt, so dass das Applikatorelement (21) die Ausgabeöffunung (14a) verschließt oder öffnet.

15. Vorrichtung nach dem vorstehenden Anspruch, wobei die Applikatorspitze (22) eine Applikatorspitze für Mascara und/oder ein Lippenprodukt ist.

16. Verfahren zur Herstellung eines Behälters (100) nach einem der Ansprüche 1 bis 12, wobei der Formgebungsträger (12) zuerst auf die Umfangswand der ersten Endöffnung (11a) aufgesteckt wird, und dann ein Spritzguss zum Bilden des Verschlusses (13) durch ein Ende des Formgebungsträgers (12), das vom Reservoir (11c) entfernt ist, auf Höhe der Umfangswand der ersten Endöffnung (11a) durchgeführt wird.

## Claims

1. A container (100) for a cosmetic product, comprising a tubular skirt (11) forming a reservoir (11c) for receiving the cosmetic product (11) and further comprising a first end opening (11a), and a second end opening (11b) opposite the first end opening (11a),
the first end opening (11b) being located in a lower portion of the container and sealed by a cap (13) having a rigidity greater than that of the tubular skirt (11),
**characterised in that** the lower portion of the container comprises a moulding support (12) fitted inside a circumferential wall of the first end opening (11a), and
said cap (13) is arranged at one end of the moulding support and on the circumferential wall of the first end opening (11a) and over-moulded onto both the moulding support and onto said circumferential wall.

2. The container (100) as claimed in claim 1, wherein the lower portion of the container comprises a positioning surface allowing the container to be held stably on a flat support.

3. The container (100) according to any one of the preceding claims, wherein the tubular skirt is made of a flexible material.

4. The container (100) according to the preceding claim comprising at least one flexible pressure area.

5. The container (100) according to the preceding claim, wherein the at least one flexible pressure area corresponds to all or part of 95% of the length of the tube.

6. The container (100) according to any one of claims 2 to 5, wherein the positioning surface is on a peripheral area and/or a central area of the cap.

7. The container (100) according to any one of the preceding claims, wherein the cap (13) comprises a central cap portion (131) covering an end of the moulding support (12) opposite the reservoir (11c), and an annular cap sleeve (132) surrounding an external circumference of the central cap portion (131) and provided with a lower portion supportable on the support surface, at least one portion of an external circumferential surface of the cap sleeve (132) being connected to the circumferential wall of the first end opening (11a).

8. The container (100) according to any one of the preceding claims, wherein the thickness of the cap (13) is equal to or greater than 1 mm.

9. The container (100) according to any one of the preceding claims, wherein the moulding support (12) and the cap (13) are made of the same rigid material.

10. The container (100) according to any one of the preceding claims, wherein the moulding support (12) comprises a shell (121) and an annular external skirt (122) arranged around an external circumference of the shell (121) and provided with an external circumferential wall hermetically fitted over the circumferential wall of the first end opening (11a).

11. The container (100) according to any one of the preceding claims wherein the container (100) further comprises a head (14), a first end of the head (14) is connected to the second end opening (11b), and another end of the head (14) is formed with a dispensing orifice (14a) in communication with the reservoir (11c).

12. The container (100) according to the preceding claim, wherein one end of the head (14) is connected to the second end opening (11b ) by over-moulding.

13. A device for packaging and applying a cosmetic product, in particular mascara, comprising:
- a container (100) according to one of claims 1 to 12,
- an applicator assembly comprising a plug (2) comprising an application member (21) capable of closing or opening the dispensing orifice (14a), and an applicator end piece (22) connected to one end of the application member (21), capable of extending into or out of the reservoir (11c) through the dispensing orifice (14a).

14. The device according to the preceding claim wherein the plug (2) comprises a base (23), the application member (21) comprises: a connector (211) fitted into the base (23), and a stem (212) provided with a first end extending into and connected to the connector (211) and another end connected to the applicator end piece (22), the head (14) is removably fitted into the connector (211) by means of a threaded connection, so that the application member (21) closes or opens the dispensing orifice (14a).

15. The device according to the preceding claim, wherein the applicator end piece (22) is a mascara and/or lip product applicator end piece.

16. A method for manufacturing a container (100) according to any one of claims 1 to 12, wherein the moulding support (12) is first fitted over the circumferential wall of the first end opening (11a) and then an injection moulding to form the cap (13) is performed through an end of the moulding support (12) distant from the reservoir (11c) at the level of the circumferential wall of the first end opening (11a).
